# EUROPEAN PATENT APPLICATION

(11) **EP 4 389 258 A1**
(43) Date of publication of application: **26.06.2024**
(21) Application number: 22215681.2
(22) Date of filing: 21.12.2022
(51) Int. Cl.: B01D 53/52, B01D 53/80, B01D 53/81, B01J 20/10, C10G 19/073, C10G 25/00, C10G 25/05, B01J 20/28

(54) **METHOD OF INTRODUCING SILICA NANOPARTICLES TO REDUCE H2S IN A LIQUID OR GAS STREAM**

(71) Applicant: Nissan Chemical America Corporation, Houston, TX 77042 (US)
(72) Inventor: MAGUIRE-BOYLE, Samuel James, Spring, TX, 77373 (US); SOUTHWELL, John Edmond, Glenn Ellyn, IL, 60137 (US)
(74) Representative: V.O.

(57) **Abstract**

A method to reduce the amount of H₂S in a Liquid or Gas Stream, the method comprising the steps of
a) Operating an industrial process that has H₂S in a liquid or gas stream or both a liquid and gas stream associated with it, wherein the industrial process comprises connected pipes that allow liquid and gas to travel from one location to another within the process,
b) Injecting a silica nanoparticle mixture into an industrial process that has H₂S in a liquid or gas stream or both a liquid and gas stream associated with it, wherein the silica nanoparticle mixture may be in a colloidal state or in a dry state; and
c) Presenting the materials in the silica nanoparticle mixture in such a way that they react with the H₂S resulting in the reduction of H₂S in the liquid or gas produced fluid.

In certain embodiments, the silica nanoparticle mixture includes silica nanoparticles with or without a surface treatment, and one or more chemicals selected from the group consisting of triazines, alcohols, polyols, ketones, aldehydes and hemiacetals.

## Description

### Field of the Invention

This invention is in the field of methods to reduce H₂S in a Liquid or Gas Stream.

### Background of the Invention

Hydrogen Sulfide (hereinafter "H₂S") exists as an unwanted contaminant in many different types of liquid and gas streams, including, but not limited to oil, natural gas, internal and external refinery streams, tar sands, SAGD (SAGD stands for "Steam-assisted gravity drainage", which is an enhanced oil recovery technique used to extract heavy crude oil which is buried too deep or otherwise burdensome to access), geothermal wells and others.

Hydrogen Sulfide scavenging refers to the introduction of a chemical which reacts non-reversibly with H₂S, thus removing it from the liquid or gas stream, is an increasing popular way of dealing with this problem. The main types of scavengers available on the market are triazines, particularly 1,3,5-Tris(2-hydroxyethyl)hexahydro-s-triazine, hereafter MEA-Triazine. MEA-Triazine, theoretically reacts rapidly with two or more equivalents of H₂S when it is the only acid gas present to form 5 (2-hydroxyethyl)-hexahydro-1,3,5-dithiazine. MEA-Triazine has fast kinetics, works well across a broad temperature range, and can be manufactured cheaply.

However, there are some significant drawbacks to the use of Triazine. The high pH of the water based triazine solutions can lead to carbonate scaling, and further reactions of the dithiazines form an insoluble polymer which can lead to blockages of surfaces. For these reasons, many companies are interested in developing new H₂S scavengers.

The recently presented paper "Simultaneous Control of Subsurface Scale, Corrosion, and H2S Using a Single Capillary String: A Real-World Chemical Application in the Permian Basin" (hereinafter "Simultaneous Control"}, SPE-210140-MS, ^{©}2022, Society of Petroleum Engineers details the laboratory development and subsequent field trial of a Downhole, Non-Triazine H₂S Scavenger (DNTS) that was co-injected via a single capillary string (cap-string) with the incumbent scale/ corrosion inhibitor (CI/SI) combination product. The target sour producer wells were configured with single cap-strings, and it was considered critical that H₂S suppression was moved further upstream to the tubulars. This method has been developed for high-risk sour gas producers to improve overall control of H₂S mitigation in high risk sour gas producer wells and across the topsides process of these wells. The dual injection approach was preferred to ` 1-can' injection (all production chemicals formulated into one fluid package) as it allowed targeting and more effective use of chemicals deployed for control of corrosion, scale and H₂S within the receiving wells and for the topside processes.

The "Simultaneous Control" paper states (internal citations removed) as follows:
Hydrogen sulfide (H₂S) is a common contaminant in oilfield production scenarios globally and occurs due to organic (biological) souring processes in the reservoir and near well bore (i.e., the action of sulfate reducing bacteria) and/or from inorganic processes deep in the formation occurring over geological time periods. H₂S is unwanted, undesirable, and unpleasant as it is highly toxic, and can create serious integrity and safety risks due to exacerbating corrosion potentials. The degree of H₂S contamination can vary widely, from a few ppm to >100000 ppm depending on the field, and the industry response to the higher levels of sour gas contamination is to sweeten production before export. Two chemical treatment methods commonly used by the oil industry for sweetening sour production are continuous injection of H₂S mitigating chemical into the flowing stream of fluid(s) and/or gas and use of an inline gas contact tower where the sour gas flows through a scavenger laden vessel to strip out the H₂S. Typically, the latter method is employed for higher H₂S loading where residence time and kinetics could be a challenge for a continuous injection type treatment.

H₂S scavengers fall into two broad classes defined by their mechanism of chemical action.

Oxidative types increase the valence state of the sulfur atom of H₂S (-2 state) to sulfur (valence state ⁰) or higher (SO₄ -2 valence state ⁺⁶), and include chlorine dioxide, sodium hypochlorite, hydrogen peroxide, per(oxy)acetic acid, potassium permanganate, etc. Although they are effective for sweetening sour production, they tend to be non-specific in action and react with other production components and present significant handling and integrity challenges.

Non-oxidative scavengers react with H₂S to convert it to a product sulfide species where new (often irreversible) bonds are formed. Triazines(such as hexahydro 1,3,5-tris(hydroxyethyl)-s-triazine or MEA-Triazine are the industry preferred option for H₂S management and have dominated oilfield applications to date. There are several non-triazine options available to the industry that are finding increasing favor, including, hemi-acetals (formals), zinc carboxylates, oxazolidines, and aldehyde functional material such as Glyoxal.

MEA-Triazines do have their downsides, particularly with respect to the physical condition, chemistry and fate of the spent scavenger. Historically non-Triazine options have been considered only when triazine use has incurred additional flow assurance problems. Downhole chemical injection (DHCI) has been available to the industry from earliest times with the simplest deployment performed via injection of treating chemical into the annulus of producer wells. The technique has advanced somewhat across the intervening years and `backside injection' is currently used widely across onshore North America. The technique involves injection of the chemical composition or compositions into a 'slip-stream' of produced fluids (from the flowline) and the combined fluids directed downhole into the producer well. The most used downhole injection technique used globally is continuous downhole chemical injection (DHCI) via dedicated cap.

Cap-string deployed chemical products are necessarily prepared in low volatility solvents (e.g., glycol) to negate issues associated with solvent stripping resulting from heat/hydrostatic overbalance creating a vacuum in-tube. It is possible to modify the physical properties (viscosity and density) of a DHCI product to create preferential hydrostatic conditions in the tubing to minimize vacuum formation and thus create a uniform delivery of chemical. Besides cap-string DHCI, chemicals can also be deployed downhole via the well gas lift system (GLCI). The formulated chemical is dosed into the lift gas stream at surface and passes into the well annulus. Although a quasi-aerosol effect may present at first, the sputtered chemical droplets quickly collect on tubing surfaces and flow-descend down well into the gas lift valve (GLV) sump at the GLV location some distance below the subsurface safety valve (SSSV). As the volume of chemical in the sump rises, the fluid level broaches the GLV inlet and the chemical is swept through the valve and into production. Downhole injection via GLCI is problematic due to the rarified environment that the deployed chemical is exposed to during descent to the sump. High volatility solvents are to be avoided with this type of method of application at all costs to minimize issues related to premature solvent loss which in turn results in product viscosification and gunking.

Application of H₂S scavengers downhole adds an additional dimension to the challenge as multiphase H₂S scavenging is considerably more complex compared to single phase application, and multiple phase partitioning effects need to be addressed to achieve optimum scavenging action. Besides being thermally robust, DHCI formulations need to be compatible with the brines they are most likely to encounter during application to avoid formation of solid chemical-brine metal ion salts and/or phase separation of brine mineral scales resulting from pH change. DHCI chemical formulations therefore tend to be pH neutral or slightly acidic. High pH DHCI formulations (> pH7) are avoided especially if the produced water it may contact downhole has an appreciable calcium carbonate scaling potential; pH increase can greatly increase the chance that CaCO₃ scale will form. MEA-triazines are usually highly alkaline and therefore will negatively impact brine pH, and impact mineral scaling. For this reason, triazine based scavengers are typically avoided for subsurface application for H₂S management. There are (few examples of case studies of H₂S scavenger application downhole available in the literature.

Additional references describe alternative chemical treatments for H₂S Scavenging in a liquid or gas well.

Dorf Ketal has reported, see MAXSCAV^{™} - Dorf Ketal, new technology for improving performance of non-regenerative H₂S scavenging chemistries. The new technology is now available to reduce the cost and improve the efficiency for most of the chemistries used in applications ranging from upstream production and transport to crude oil refining and finished product transport e.g. asphalt/bitumen.

MAXSCAV^{™} 2nd generation catalyst technology is designed specifically for treatment of H₂S in natural gas in contact towers, bubble towers and Dorf Ketal proprietary technology UltraFab^{™} systems.

MEA-triazine is the most commonly used chemistry for applications requiring a non-regenerative H₂S scavenger. Other chemistries are available (MMA-triazine, Glyoxal, zinc-based, iron-based, and others) but MEA-triazine has the highest market share because it is the lowest cost in use solution. Triazines are low cost in use despite the fact that the molar efficiency of the chemistry in capturing H₂S is significantly below theoretical maximum efficiency.

Quaternary ammonium compounds accelerate the reaction between MEA-triazine and H₂S to improve molar efficiency. But significant inefficiencies remain, including excess cost, increased pH and scale formation and increased problems in downstream refining which may include decreased desalter performance and elevated risk of overhead corrosion.

MAXSCAV^{™} is new patent pending technology that dramatically increases the molar efficiency of MEA-triazine and other chemistries including MMA-triazine, Glyoxal and zinc-based scavengers. The reduction in MEA-triazine required to scavenge the H₂S offers potential to decrease line item expense by up 25% to 50%. The reduction in over-dosage of the chemical can also reduce the cost of scale formation and downstream refining problems. Again, see MAXSCAV^{™} - Dorf Ketal.

Canadian Patent Number 2991180C, issued April 23, 2019, "Hydrogen sulfide Scavenging Additive Compositions, and Medium Comprising the Same" assigned to Dorf Ketal, describes and claims an invention relating to a hydrogen sulfide scavenging additive composition, wherein the composition comprises: a. an additive 1 comprising at least one compound selected from the group comprising zinc compound, zinc soap, and zinc salt of organic acid; and b. at least one activator comprising one or more hydroxyl alkylated amine. In one embodiment, the composition further comprise an additive 2 comprising polyphosphoric acid (PPA). In one embodiment, the present invention also relates to a method of using the hydrogen sulfide scavenging additive compositions of the present invention for scavenging the hydrogen sulfide in the medium. In one embodiment, the present invention also relates to a method of scavenging hydrogen sulfide in the medium by employing the hydrogen sulfide scavenging additive compositions of the present invention. In one embodiment, the present invention also relates to a medium comprising hydrogen sulfide (H₂S) scavenging additive compositions of the present invention.

Descriptions of other techniques for removal of H₂S from process streams can be found in the following references: "Formation, Chemical Characterization, and Oxidative Dissolution of Amorphous Polymeric Dithiazine (apDTZ) during the Use of the H2S Scavenger Monoethanoloamine-Triazine", written by Wylde, Taylor, Sorbie and Samaniego, Energy Fluids, 2020, 34, 9923-9931*;*
US 2013/0004393 A1, "Synergistic Method for Enhanced H2S /Mercaptan Scavenging", Assigned to Baker Hughes Incorporated. Published on January 3, 2013; and
US 2018/0291284 A1, "Microparticles for Capturing Mercaptans", Assigned to Ecolab USA Inc., First published on October 11, 2018, describes and claims a sulfide scavenging nanoparticle, comprising a colloidal nanoparticle substrate consisting of silica or alumina, the colloidal substrate coated with a sulfide-reacting metal selected from Iron 2Plus (Fe²⁺)and Zn²⁺, where the nanoparticles have a particle size range of from about 5 to about 250 nm.

What is needed are additional materials and methods to reduce the amount of H₂S in a Liquid or Gas Stream to overcome these issues.

### Summary of the Invention

The first aspect of the instant claimed invention is a method to reduce the amount of H₂S in a Liquid or Gas Stream, the method comprising the steps of
a) Operating an industrial process that has H₂S in a liquid or gas stream or both a liquid and gas stream associated with it, wherein the industrial process comprises connected pipes that allow liquid and gas to travel from one location to another within the process,
b) Injecting a silica nanoparticle mixture into an industrial process that has H₂S in a liquid or gas stream or both a liquid and gas stream associated with it, wherein the silica nanoparticle mixture may be in a colloidal state or in a dry state; and
c) Presenting the materials in the silica nanoparticle mixture in such a way that they react with the H₂S resulting in the reduction of H₂S in the liquid or gas produced fluid.

The second aspect of the instant claimed invention is the first aspect of the instant claimed invention wherein the silica nanoparticle mixture comprises silica nanoparticles, and one or more chemicals selected from the group consisting of triazines, alcohols, polyols, ketones, aldehydes and hemiacetals.

The third aspect of the instant claimed invention is the first aspect of the instant claimed invention which the silica nanoparticle mixture comprises both non-surface treated nanoparticles and surface treated nanoparticles.

The fourth aspect of the instant claimed invention is the first aspect of the instant claimed invention wherein the silica nanoparticles are reacting with the H₂S under turbulent flow conditions where the Reynolds Number of the flow conditions is equal to or greater than 4000.

The fifth aspect of the instant claimed invention is the first aspect of the instant claimed invention where the liquid or gas stream is selected from the group consisting of oil, natural gas, refineries, tar sands, SAGD, geothermal wells and combinations thereof.

The sixth aspect of the instant claimed invention is the fifth aspect of the instant claimed invention where the liquid or gas stream is selected from the group consisting of an oil and natural gas streams.

The seventh aspect of the instant claimed invention is the third aspect of the instant claimed invention in which the nanoparticle mixture has at least 95% non-surface treated silica nanoparticles and at least 5% surface treated nanoparticles.

The eighth aspect of the instant claimed invention is the third aspect of the instant claimed invention in which the nanoparticle mixture has at least 85% non-surface treated silica nanoparticles and at least 15% surface treated nanoparticles.

The ninth aspect of the instant claimed invention is the third aspect of the instant claimed invention in which the nanoparticle mixture has at least 75% non-surface treated silica nanoparticles and at least 25% surface treated nanoparticles.

The tenth aspect of the instant claimed invention is the third aspect of the instant claimed invention in which the nanoparticle mixture has at least 60% non-surface treated silica nanoparticles and at least 40% surface treated nanoparticles.

The eleventh aspect of the instant claimed invention is the third aspect of the instant claimed invention in which the nanoparticle mixture has at least 35% non-surface treated silica nanoparticles and at least 65% surface treated nanoparticles.

### Detailed Description of the Invention

The first aspect of the instant claimed invention is a method to reduce the amount of H₂S in a Liquid or Gas Stream, the method comprising the steps of
a) Operating an industrial process that has H₂S in a liquid or gas stream or both a liquid and gas stream associated with it, wherein the industrial process comprises connected pipes that allow liquid and gas to travel from one location to another within the process,
b) Injecting a silica nanoparticle mixture into an industrial process that has H₂S in a liquid or gas stream or both a liquid and gas stream associated with it, wherein the silica nanoparticle mixture may be in a colloidal state or in a dry state; and
c) Presenting the materials in the silica nanoparticle mixture in such a way that they react with the H₂S resulting in the reduction of H₂S in the liquid or gas produced fluid.

In this invention, the industrial process stream comprising a liquid or gas stream is selected from the group consisting of oil, natural gas, internal and external refinery streams, tar sands, SAGD, geothermal wells and combinations thereof. These industrial process streams are well known to persons of ordinary skill in the art. Each of these industrial process streams has piping that connects different parts of the process and that are used to move material(s) through the process. Each of the piping configurations may be similar or different, depending upon the material being moved. What is congruent with all of these processes is that the liquid or gas in the process stream contains H₂S which must be removed before the material in the process stream comes into contact with transport piping that would move the material.

As used herein, the term "nanoparticle" means a particle from about 1 to about 100 nanometers in diameter. In some embodiments, the term "nanoparticle" means a cluster of atoms or molecules with a radius of less than 100 nanometers. In some embodiments, the term nanoparticle is applied to inorganic materials, for example, silica. As used herein, the term "silica" may refer to silica particles or a silica dispersion. As used herein, the term "silica" may refer to silica particles originating from colloidal silica or from fumed/dry silica. As used herein, the term "nanoparticles" can refer to both multiple individual nanoparticles as well as a population of nanoparticles of a particular type. Nanoparticles can also be referred to nanometer-sized particles, and nano powders are agglomerates of nanoparticles. In some embodiments, the term "nanofluid" means a base fluid, for example, water or oil, that comprises nanoparticles, including fluids with some or all of the nanoparticles in suspension.

Silica nanoparticles are all commercially available from Nissan Chemical America. Corporation under the trademark "SNOWTEX". Evonik colloidal silica nanoparticles are commercially available under the trademark "IDISIL". Evonik's commercially available fumed and precipitated silica nanoparticle products are branded "AEROSIL" and "SIPERNAT" respectively. Cabot sells fumed silica nanoparticles under the brand name "CAB-O-SIL". Akzo Nobel have nanoparticle silica products for sale under the Nouryon label, and are using the product name "LEVASIL", these are colloidal silica products. Akzo has their pulp and paper business under the Eka subsidiary, new colloidal silica nanoparticle products here have a new brand "COMPOZIL". Silica nanoparticles are also available from Ecolab.

It is known that silica nanoparticles can agglomerate when exposed to fluids containing salt brine. If the fluids in the oil well or gas well include salt brine, the silica nanoparticle mixture can have present in it both non-surface treated silica nanoparticles and surface treated nanoparticles with the surface treatment being chosen to make the surface treated silica nanoparticles brine resistant. See "Brine Resistant Silica Sol", US Patent Number 10,557,078 Issued 11 Feb. 2020 and "Brine Resistant Silica Sol", US Patent Number 11,130,906 issued 28 Sept. 2021, both incorporated by reference in their entirety for description and claims of suitable surface treated silica nanoparticles.

In an embodiment, the nanoparticle mixture has at least 95% non-surface treated silica nanoparticles and at least 5% surface treated nanoparticles.

In an embodiment, the nanoparticle mixture has at least 85% non-surface treated silica nanoparticles and at least 15% surface treated nanoparticles.

In an embodiment, the nanoparticle mixture has at least 75% non-surface treated silica nanoparticles and at least 25% surface treated nanoparticles.

In an embodiment, the nanoparticle mixture has at least 60% non-surface treated silica nanoparticles and at least 40% surface treated nanoparticles.

In an embodiment, the nanoparticle mixture has at least 35% non-surface treated silica nanoparticles and at least 65% surface treated nanoparticles.

The following materials can also be present in the silica nanoparticle mixture. Corrosion inhibitors include, but are not limited to the following categories:
Anodic Inhibitors act by forming a protective oxide film on the surface of the metal. It causes a large anodic shift that forces the metallic surface into the passivation region, which reduces the corrosion potential of the material. Some examples are chromates, nitrates, molybdates, and tungstate.

Cathodic Inhibitors down the cathodic reaction to limit the diffusion of reducing species to the metal surface. Cathodic poison and oxygen scavengers are examples of this type of inhibitor.

Mixed Inhibitors are film-forming compounds that reduce both the cathodic and anodic reactions. The most commonly used mixed inhibitors are silicates and phosphates used in domestic water softeners to prevent the formation of rust water.

Volatile Corrosion Inhibitors (VCI) are compounds being transported in a closed environment to the site of corrosion by the process of volatilization from a source. For example, in boilers, volatile compounds such as morpholine or hydrazine, are transported with steam to prevent corrosion in condenser tubes.

In an embodiment, corrosion inhibitors include amine-based chemicals which have H₂S scrubbing activity. These may include imidazole or quaternary amine type moieties. In an embodiment the corrosion inhibitor is an imidazole.

Oilfield scaling is the precipitation and accumulation of insoluble crystals from a mixture of incompatible aqueous phases in oil processing systems. These crystals can precipitate and grow over time, resulting in blocking or hindering flow through pipelines, valves, pumps, etc., with a significant reduction in production rates. The most common types of oilfield scale are calcium carbonate, barium sulfate, and calcium sulfate. In an embodiment, scale inhibitors type chemistries include but are not limited to phosphonates. Phosphonates are commercially available.

Additional corrosion inhibitors and scale inhibitors are described in the following references: EP 3277771 B1, "Composition and Method for Inhibition of Sulfide Scales", assigned to Clariant International, Ltd., First Published on May 8, 2019;

EP 3475385B1, "Amorphous Diathiazine Dissolution Formulation and Method for Using the Same, Published on Feb 26, 2020, assigned to Clariant International Ltd;

US 2022/0119699 A9, "Synergized Acetals Compositions and Method for Scavenging Sulfides and Mercaptans, Assigned to Clariant International, Ltd. Published on April 21, 2022, first published on April 9, 2020 as US 2020/0109329 A1.

The silica nanoparticle mixture may be added to the tube string either dry or mixed in with a carrier fluid. When a carrier fluid is used to add the silica nanoparticles the carrier fluid may be liquid or gaseous.

When the carrier fluid is gaseous the gas may be any gas that does not cause problematic reactions. In an embodiment the gas is selected from the group consisting of natural gas, liquefied natural gas (LNG), methane (CH₄), nitrogen (N₂), Helium (He) and mixtures thereof. In an embodiment the gas is selected from the group consisting of carbon dioxide (CO₂) and mixtures with other gases.

In an embodiment, the mixture comprising silica nanoparticles is added in such a way that the Reynolds Number ("Re") is 4000 or greater. The Reynolds number (Re) helps predict flow patterns in different fluid flow situations by measuring the ratio
between inertial and viscous forces. At low Reynolds numbers, flows tend to be dominated by laminar (sheet-like) flow, while at high Reynolds numbers flows tend to be turbulent. The turbulence results from differences in the fluid's speed and direction, which may sometimes intersect or even move counter to the overall direction of the flow (eddy currents). These eddy currents begin to churn the flow, using up energy in the process, which for liquids increases the chances of cavitation. Reynolds numbers are an important dimensionless quantity in fluid mechanics.

When the Reynolds number is 4000 or greater, then the fluid is moving in what is called "turbulent" flow. Turbulent flow is useful in enhancing the contacting of H₂S with the nanoparticle mixture and enhanced contact facilitates the removal of the H₂S.

The invention is further illustrated by the following embodiments.
1. A method to reduce the amount of H₂S in a liquid or gas stream, the method comprising the steps of
   a) operating an industrial process that has H₂S in a liquid or gas stream or both a liquid and gas stream associated with it, wherein the industrial process comprises connected pipes that allow liquid and gas to travel from one location to another within the process,
   b) injecting a silica nanoparticle mixture into an industrial process that has H₂S in a liquid or gas stream or both a liquid and gas stream associated with it, wherein the silica nanoparticle mixture may be in a colloidal state or in a dry state; and
   c) presenting the materials in the silica nanoparticle mixture in such a way that they react with the H₂S resulting in the reduction of H₂S in the liquid or gas produced fluid.
2. The method of embodiment 1 wherein the silica nanoparticle mixture comprises silica nanoparticles, and one or more chemicals selected from the group consisting of triazines, alcohols, polyols, ketones, aldehydes and hemiacetals.
3. The method of embodiment 1 in which the silica nanoparticle mixture comprises both non-surface treated silica nanoparticles and surface treated silica nanoparticles.
4. The method of embodiment 1 wherein the silica nanoparticles are reacting with the H₂S under turbulent flow conditions where the Reynolds Number of the flow conditions is greater than or equal to 4000.
5. The method of embodiment 1 where the liquid or gas stream is selected from the group consisting of oil, natural gas, internal or external refinery streams, tar sands, SAGD, geothermal wells and combinations thereof.
6. The method of embodiment 5 wherein the liquid or gas stream is selected from the group consisting of oil and natural gas streams.
7. The method of embodiment 3 in which the nanoparticle mixture has at least 95% non-surface treated silica nanoparticles and at least 5% surface treated nanoparticles.
8. The method of embodiment 3 in which the nanoparticle mixture has at least 85% non-surface treated silica nanoparticles and at least 15% surface treated nanoparticles.
9. The method of embodiment 3 in which the nanoparticle mixture has at least 75% non-surface treated silica nanoparticles and at least 25% surface treated nanoparticles.
10. The method of embodiment 3 in which the nanoparticle mixture has at least 60% non-surface treated silica nanoparticles and at least 40% surface treated nanoparticles.
11. The method of embodiment 3 in which the nanoparticle mixture has at least 35% non-surface treated silica nanoparticles and at least 65% surface treated nanoparticles.

### Examples

### Laboratory Test Methods

### First Test method.

Setup: 10% (100,000 ppm) H₂S in N₂ is bubbled, at a flow rate of 475 mL/per minute, through a container with 300 mL of test formula.
1. A H₂S sensor measures the concentration of H₂S in the eluted gas stream.
2. The measurement stops when the concentration of H₂S in the gas stream reaches a concentration of 40 ppm. The time it takes to reach an H₂S concentration of 40 ppm is recorded and the times for each test formula are recorded.

### Second Test Method

There are several standard laboratory tests, such as the gas breakthrough test and the Parr reactor. Furthermore, there is increasing interest in using sulfide detecting electrodes to measure the kinetics of scavenging reactions. These tests are all able to assess the performance and capacity of the H₂S scavenger by measuring the depletion rate of H₂S. Each of these tests has been developed as a laboratory simulation of a different field applications. The gas breakthrough test is a simulation of a contact tower. The Parr reactor which is able to assess the performance and capacity of scavenger at elevated temperatures and pressures, provides information about multiphase and downhole scavenging. However, in the case of direct injection there is still a gap between laboratory prediction of scavenger performance and actual results from field use. While it is known that the method of injection plays a large role in the distribution and thus performance of the scavenger, none of the laboratory based methods incorporate this function.

Industry has recognized the need to better predict the field performance of scavengers, particularly for direct chemical injection and this has led to the development of simulation software also being able to take into account flow conditions in the pipe. There are reports of several large scale device which have been developed to simulate different types of liquid and gas installations, covering applications such as sea floor pipelines, injection of scavengers into the multiphase and gas pipelines loops which can evaluate the performance of scavengers.

However, each experiment involves considerable amounts of liquid or gas and scavengers, which are all not at insignificant cost so can only be considered for late stage development work. What is missing in this field is a lab scale test, which incorporates the physics of spraying chemicals, gas flow and mass transfer processing involved in the direct injection treatment of sour gas fields. This article describes the development of such a device and how it can be used to overcome these problems. "Laboratory Simulation of Gas Sweetening", written by Murison, Schneider, Muller, Punga, Low, Peerlings, Feustel, Aylor, Wylde and Kelly, preprint citation "View of A new method to simulate acidic gas sweetening on a laboratory scale (engrxiv.org)" and then published in a book on December 13, 2016 (hereinafter "Murison").

### Example 1 (comparative example)

A sample of gas containing H₂S is obtained and the initial concentration of H₂S is measured. The gas is contacted with MEA-triazine using the First Test Method. The concentration of H₂S is measured after contact with MEA-triazine. A measureable reduction in the amount of H₂S is detected.

### Example 2

Example 1 is repeated but in this example, a mixture of colloidal silica comprising at least 85% non-surface treated silica nanoparticles and at least 15% surface treated nanoparticles, is mixed with MEA-Triazine and then this mixture is tested with the First Test Method. A measureable reduction in the amount of H₂S is detected.

### Example 3

The composition of Example 2 is tested using the "Murison" test method (the Second Test Method). A reduction in the detectable amount of H₂S is identified.

## Claims

1. A method to reduce the amount of H₂S in a liquid or gas stream, the method comprising the steps of
a) injecting a silica nanoparticle mixture into an industrial process that has H₂S in a liquid or gas stream or both a liquid and gas stream associated with it, wherein the silica nanoparticle mixture may be in a colloidal state or in a dry state; and
b) reacting the silica nanoparticle mixture with the H₂S resulting in the reduction of H₂S in the liquid or gas produced fluid.

2. The method of claim 1, wherein the industrial process comprises connected pipes that allow liquid and/or gas to travel from one location to another within the process.

3. The method of claim 1 or 2, wherein the silica nanoparticle mixture comprises silica nanoparticles, and one or more chemicals selected from the group consisting of triazines, alcohols, polyols, ketones, aldehydes and hemiacetals.

4. The method of any one of claims 1-3 in which the silica nanoparticle mixture comprises both non-surface treated silica nanoparticles and surface treated silica nanoparticles.

5. The method of any one of claims 1-4 wherein the silica nanoparticle mixture is reacted with the H₂S under turbulent flow conditions where the Reynolds Number of the flow conditions is greater than or equal to 4000.

6. The method of any one of claims 1-5 where the liquid or gas stream is selected from the group consisting of oil, natural gas, internal or external refinery streams, tar sands, SAGD, geothermal wells and combinations thereof.

7. The method of any one of claims 1-6 wherein the liquid or gas stream is selected from the group consisting of oil and natural gas streams.

8. The method of any one of claims 1-7, wherein the silica nanoparticle mixture further comprises one or more corrosion inhibitors.

9. The method of claim 8, wherein the one or more corrosion inhibitors are selected from the group consisting of anodic inhibitors, cathodic inhibitors, mixed inhibitors, and volatile corrosion inhibitors.

10. The method of claim 8 or 9, wherein the one or more corrosion inhibitor comprises one or more selected from the group consisting of morpholine, hydrazine, and imidazole, preferably the corrosion inhibitor comprises imidazole.

11. The method of claim 4, wherein the nanoparticle mixture has at least 95% by total weight of non-surface treated silica nanoparticles and at least 5% by total weight of surface treated nanoparticles, preferably the nanoparticle mixture has at least 85% by total weight of non-surface treated silica nanoparticles and at least 15% by total weight of surface treated nanoparticles.

12. The method of claim 4, wherein the nanoparticle mixture has at least 75% by total weight of non-surface treated silica nanoparticles and at least 25% by total weight of surface treated nanoparticles.

13. The method of claim 4, wherein the nanoparticle mixture has at least 60% by total weight of non-surface treated silica nanoparticles and at least 40% by total weight of surface treated nanoparticles.

14. The method of claim 4, wherein the nanoparticle mixture has at least 35% by total weight of non-surface treated silica nanoparticles and at least 65% by total weight of surface treated nanoparticles.

15. The method of any one of Claims 4-14 wherein said surface treated silica nanoparticles comprise silica particles surface functionalized with a polysiloxane oligomer comprising
- a monomeric unit of glycidoxypropyltrimethoxysilane, and
- a monomeric unit selected from the group consisting of phenyltrimethoxysilane, methacryloxypropyltrimethoxysilane, isobutyltrimethoxysilane, vinyltrimethoxysilane, 2-(7-oxabicyclo[4.1.0]hept-3-yl)ethyltrimethoxysilane, and hexamethyldisiloxane.
